# EUROPÄISCHE PATENTSCHRIFT

(11) **EP 2 766 242 B1**
(45) Veröffentlichungstag und Bekanntmachung des Hinweises auf die Patenterteilung: **29.11.2017**
(21) Anmeldenummer: 12761952.6
(22) Anmeldetag: 14.09.2012
(51) Int. Cl.: B62B 3/14, B62B 5/06

(54) **SCHIEBEGRIFF FÜR EINEN EINKAUFSWAGEN**
HANDLEBAR FOR A SHOPPING TROLLEY
POIGNÉE POUR UN CHARIOT DE COURSES

(30) Priorität: 14.10.2011 DE 102011115900; 15.11.2011 DE 102011118506
(43) Veröffentlichungstag der Anmeldung: 20.08.2014
(73) Patentinhaber: Filosi, Andreas, 82178 Puchheim (DE); Wieth, Franz, 82178 Puchheim (DE)
(72) Erfinder: Sonnendorfer, Horst, verstorben (DE); Wieth, Franz, 82178 Puchheim (DE)
(74) Vertreter: Kreuzberg, Markus
(86) Internationale Anmeldenummer: PCT/EP2012/068138
(87) Internationale Veröffentlichungsnummer: WO 2013/053567

(56) Entgegenhaltungen:
- DE-A1- 19 858 450
- DE-U1- 29 510 138
- DE-U1- 29 612 195
- DE-U1-202009 009 732
- DE-U1-202009 014 266
- US-A- 5 263 578
- US-B1- 6 817 066

## Beschreibung

Die Erfindung betrifft einen Schiebegriff für einen Einkaufswagen und ein aus einem erfindungsgemäßen Schiebegriff und einem mobilen Telekommunikationsendgerät bestehendes Diebstahl-Warnsystem.

Schiebegriffe für Einkaufswagen sind längst über ihre ursprüngliche Aufgabe hinausgewachsen. Aus der einfachen Stange, an der ein Einkaufswagen durch ein Geschäft geschoben wurde, ist längst ein Funktionsträger geworden, der eine Vielzahl von Anforderungen gerecht zu werden hat. Der moderne Schiebegriff ist meist ergonomisch geformt, trägt üblicherweise ein Pfandschloss und umfasst vielfach ein Werbedisplay.

Vereinzelt weisen Schiebegriffe für Einkaufswagen auch eine Halterung auf, über die weitere Funktionsteile am Schiebegriff mitgeführt werden können. So zeigt die GB 2 393 526 A eine Lupe, die über einen Schwanenhals an einem Schiebegriff gehalten wird. Ein solcher Schwanenhals weist eine große Flexibilität auf, so dass die Lupe in beliebiger Position gehalten werden kann. Diese Halterung benötigt aber viel Platz und ist deshalb oft im Weg, wenn der Kunde Waren in seinen Einkaufswagen legen möchte. Zudem ist diese Halterungen nicht variabel. Sie ist fest mit der Lupe verbunden, so dass es nicht möglich ist, andere Funktionsteile mit ihr am Schiebegriff zu befestigen.

Schiebegriffe können seit einiger Zeit auch mit einer Halterung für einen von dem jeweiligen Geschäft zur Verfügung gestellten proprietären Einkaufsassistenten ausgestattet werden. Solche Einkaufsassistenten werden beispielsweise dazu genutzt, um auf ihrem Display vertiefende Informationen über zum Verkauf angebotene Waren abzufragen oder auf Sonderangebote aufmerksam zu machen. Die zu übermittelnde Information wird dabei üblicherweise über ein im Geschäft vorgehaltenes WLAN zur Verfügung gestellt.

Ein derartiger Einkaufassistent wird im Geschäft ausgegeben und benötigt eine proprietäre Halterung, in der er während des Einkaufs abgelegt werden kann. Hierfür wird am Schiebegriff des Einkaufswagens eine für den Einkaufassistent passende Halterung ausgebildet. Nach dem Einkauf verbleibt der Einkaufsassistent im Geschäft, so dass sein Nutzen für den Kunden auf die wenigen Anwendungsmöglichkeiten im Geschäft begrenzt ist.

Im Gegensatz zu einem proprietären Einkaufsassistenten sind die modernen mobilen Telekommunikationsendgeräte, die im Weiteren auch als Smartphones bezeichnet werden, darauf ausgelegt, dass der Besitzer sie an seine jeweiligen Bedürfnisse und Vorlieben anpassen kann. Zugleich werden die Smartphones von ihrem Besitzer meist jederzeit und überall hin mitgeführt. Sie werden deshalb vermehrt für Aufgaben eingesetzt, die vorher anderweitig erledigt werden mussten. Von den in dieser Anmeldung als Smartphones bezeichneten mobilen Telekommunikationsendgeräten sind natürlich auch entsprechend ausgerüstete portable Tablet-PC's, wie beispielsweise das ipad von Apple, mit umfasst.

Immer öfter gewinnen die Smartphones auch rund um den Einkauf an Bedeutung. Das zeigt sich schon an ganz einfachen Überlegungen. Beispielsweise kann ein Einkaufszettel auf dem Gerät erstellt und im Geschäft abgerufen werden. Damit entfällt schon einmal die Gefahr, nicht alle benötigten Waren eingekauft zu haben, da der per Hand geschriebene Einkaufszettel zu Hause vergessen wurde.

Jedoch ist die Handhabung des Smartphones während des Einkaufens umständlich, sie wird oft unterbrochen. Der Kunden hat meist keine freie Hand zur Verfügung und muss das Smartphone immer wieder weglegen. Er benötigt seine Hände anderweitig, beispielsweise um nach Waren zu greifen oder den Einkaufswagen weiterschieben zu können. Ihm sind somit sprichwörtlich die Hände gebunden.

Aus dem DE 20 2009 009 732 U1 ist eine am Griff eines Einkaufswagens befestigte Halterung für ein Zusatzelement bekannt, welches zwischen einer Gebrauchsposition und einer geschützt am Griff anliegenden Ruhestellung verschwenkt werden kann.

Eine Aufgabe der vorliegenden Anmeldung ist es daher, einen Schiebegriff für einen Einkaufswagen vorzuschlagen, an dem ein vom Kunden mitgebrachtes mobiles Telekommunikationsendgerät auf einfache Weise gehalten und während des Einkaufs bequem und leicht bedienbar mitgeführt werden kann.

Diese Aufgabe wird gelöst durch einen Schiebegriff für einen Einkaufswagen gemäß Anspruch 1. besonders Vorteilhafte Ausführungsformen des Schiebegriffs werden in den Unteransprüchen beschrieben.

Ein wesentlicher Grundgedanke der vorliegenden Anmeldung ist es, den Schiebegriff mit einer Halterung für ein vom Kunden mitgeführtes Smartphone auszustatten. Die vorgeschlagene Halterung umfasst eine Aufnahme für das Telekommunikationsendgerät und ein Drehgelenk, mittels dem die Aufnahme zwischen einer am Schiebegriff anliegenden Ruheposition und einer vom Schiebegriff abstehenden Halteposition verschwenkbar ist.

Smartphones verfügen in ihrer Grundausstattung über die gleichen Funktionen wie die proprietären und nur beschränkt nutzbaren Einkaufsassistenten. Sie weisen eine Kamera auf, mit der beispielsweise ein Barcode abfotografiert werden kann und verfügen über die notwendigen Schnittstellen zum kabellosen Datenaustausch, wie beispielsweise WLAN bzw. Bluetooth. Sie sind somit ohne Weiteres in der Lage, die proprietären Einkaufsassistenten zu ersetzen. Zusätzlich bieten sie deutlich darüber hinaus gehende Möglichkeiten.

Mittlerweile werden von großen Handelsketten Applikationen für Smartphones angeboten, welche den Einkauf unterstützende Funktionalitäten anbieten. Diese gehen weit über die Möglichkeiten der Einkaufsassistenten hinaus, da der Einkauf am Smartphone von zu Hause vorbereitet werden kann. Eine Einkaufsliste kann beispielsweise vorbereitet werden, indem einfach verbrauchte Artikel einfach eingescannt werden. Die für Rezepte notwendigen Zutaten können automatisch zusammengestellt und in die Einkaufsliste übernommen werden. Darüber hinaus ist es möglich, schon von zu Hause aus Preise bestimmter Produkte abzufragen.

Die vorgeschlagene Halterung ermöglicht es dem Kunden, sein Smartphone beim Einkauf mitzuführen und zu bedienen, ohne es ständig in der Hand halten zu müssen. Auf diese Weise steht ihm die Funktionalitäten seines Smartphones bequem zur Verfügung. Wird die Halterung hingegen nicht benötigt, kann sie in der Ruheposition belassen werden, in der sie wenig Platz einnimmt, den Kunden beim Einkauf nicht stört und das Zusammenschieben von Einkaufswagen nicht behindert.

Die Bedienung der Halterung ist dabei quasi selbsterklärend. In der Ruheposition liegt die Halterung mit der Aufnahme für das Smartphones am Schiebegriff an. Um sein Smartphones in die Aufnahme einsetzen zu können, muss der Kunde die Halterung zwangsläufig aufklappen, wodurch die Aufnahme in die Halteposition verschwenkt wird.

Dabei ist es von Vorteil, wenn die Halteposition der Aufnahme in etwa um 30 Grad zur Senkrechten geneigt ausgebildet ist. Dann ist das Display des in der Aufnahme gehaltenen Telekommunikationsgeräts schräg nach oben geneigt und kann von dem den Einkaufswagen schiebenden Kunden gut eingesehen werden.

In einer bevorzugten Ausführungsform weist die Aufnahme eine Verriegelung für das Telekommunikationsendgerät, insbesondere einen Verriegelungsbügel auf, mit der zumindest ein Teilbereich des Telekommunikationsendgeräts umgriffen werden kann. Mit der Verriegelung wird das Smartphone nicht nur sicher in der Aufnahme gehalten, sondern auch gegen eine unbefugte Entnahme geschützt. Für den in einem unachtsamen Moment des Kunden immer möglichen Diebstahl des Smartphones muss erst einmal die Verriegelung gelöst werden.

Vorzugsweise ist die Verriegelung bei Betätigung zweier einander entgegensetzt an der Aufnahme angeordneter Tasten verstellbar. Die voneinander beabstandeten Tasten sind leicht zu bedienen und verhindern gleichzeitig eine unabsichtliche Verstellung der Verriegelung durch versehentliches Berühren. Darüber hinaus zwingen sie den Kunden, beim Öffnen oder Schließen der Verriegelung seine geöffnete Hand vor die Aufnahme zu halten, wodurch ein versehentliches Herausfallen des Smartphones aus der Aufnahme verhindert wird.

Eine zusätzliche Sicherung ergibt sich, wenn der zum Lösen der Verriegelung zu betätigende Mechanismus blockierbar ist. Eine Blockade ermöglicht es dem Kunden, sich frei im Geschäft zu bewegen und sein in der Halterung befindliches Smartphone auch ohne ungutes Gefühl einmal aus den Augen zu lassen.

In einer bevorzugten Ausführungsform ist die Blockade des Mechanismus von der Position der Aufnahme abhängig. Dabei wird die Blockade nur dann gelöst, wenn die Aufnahme in eine vorbestimmte, insbesondere in etwa senkrecht ausgerichtete Entnahmeposition geschwenkt worden ist. Bei dieser Ausführungsform ist der Mechanismus in der Halteposition der Aufnahme gesperrt, die Verriegelung erfolgt bei Einnahme dieser Position automatisch. Die Blockade der Verriegelung muss somit vom Kunden nicht extra eingestellt werden.

Diese Ausführungsform eignet sich auf besondere Weise für ein Diebstahl-Warnsystem, dass bei Entnahme des Smartphones Alarm auslöst. Das Diebstahl-Warnsystem kombiniert die Funktionalität des Schiebegriffs mit bestimmten Eigenschaften eines an der Aufnahme des Schiebegriffs gehaltenen Telekommunikationsendgeräts. Viele Smartphones sind mittlerweile mit einem Neigungssensor ausgestattet, der eine Lageveränderung des Smartphones detektieren kann. Insbesondere sei hier auf die beim IPhone von Apple beliebte Wasserwagen-APP hingewiesen.

Bei dem vorgeschlagenen Diebstahl-Warnsystem wirkt ein auf dem Telekommunikationsendgerät ablaufendes Programmprodukt, insbesondere eine Applikation, derart mit dem Neigungssensor zusammen, dass ein Verschwenken des Telekommunikationsendgeräts aus der Halteposition in die Entnahmeposition eine Codeabfrage auslöst und dass bei Nicht- oder Falscheingabe des Codes ein Signal am Telekommunikationsendgerät abgegeben wird.

Natürlich kann das beschriebene Diebstahl-Warnsystem auch mit den anderen Ausführungsform des erfindungsgemäßen Schiebegriffs eingesetzt werden.

Als Alternative zur automatischen Blockierung wird die Blockade des Mechanismus manuell durchgeführt. Hierfür kann beispielsweise ein Zahlenschloss vorgesehen werden. Das Zahlenschloss wird nach der Verriegelung eingestellt und kann nur mit der dem Kunden bekannten Zahlenfolge wieder geöffnet werden.

In einer bevorzugten Ausführungsform verfügt das Zahlenschloss über eine automatische Nullstellung, ausgelöst beispielsweise durch das Verschwenken der Halterung in die Ruheposition am Schiebegriff. So muss der nächste Kunde nicht erst das Zahlenschloss zurücksetzen, bevor er es benutzen kann. Alternativ kann der das Zahlenschloss nutzende Kunde dazu gezwungen werden, es manuell in seine Nullstellung zurück zu stellen. Hierzu ist es lediglich erforderlich, das Verschwenken der Halterung in die Ruheposition bei nicht zurück gestelltem Zahlenschloss zu blockieren. Um sein Pfand in Ruheposition der Halterung entnehmen zu können, muss der Kunde das Zahlenschloss zwangsweise zurückstellen.

Besonders vorteilhaft ist es, wenn die Aufnahme einen Detektor aufweist, der detektiert, ob sich ein Telekommunikationsendgerät in der Aufnahme befindet. Eine solche Detektion ermöglicht eine Vielzahl von weiteren Anwendungsmöglichkeiten, wie im Weiteren gezeigt wird.

Beispielsweise kann der Detektor dazu genutzt werden, dass bei Detektion des Telekommunikationsendgeräts ein Verschwenken der Aufnahme in die Ruheposition blockiert ist. Dies hat den Vorteil, dass der Kunde nicht einfach in einem unachtsamen Moment oder versehentlich die Halterung zuklappt und sein Smartphone nach dem Einkauf darin vergisst.

Ein besonderer Vorteil ist gegeben, wenn die Aufnahme zusätzlich eine Blende für ein am Schiebegriff angeordnetes Pfandschloss umfasst. Die Blende ist derart ausgebildet, dass sie die Schlossöffnung des Pfandschlosses in der Ruheposition der Aufnahme abdeckt und in der Arbeitsposition der Aufnahme freigibt. Bei dieser Ausführungsform kann der Kunde nur dann einen Schlüssel in das Pfandschloss einführen, wenn die Aufnahme in Ruheposition geschwenkt worden ist. Um dies zu können, muss er sein Smartphone entnehmen. Andernfalls bleibt die Pfandschlossöffnung versperrt und der Kunde kann in Folge sein im Pfandschloss gehaltenes Pfand nicht entnehmen. Dem Vergessen des Smartphones in der Aufnahme wird so wirksam vorgebeugt.

Vorzugsweise weist die Aufnahme eine elektrische Schnittstelle für das mobile Telekommunikationsendgerät auf. Die durch die Schnittstelle ermöglichte Übertragung von Energie bzw. Daten bietet die Grundlage für eine große Zahl weiterer vorteilhafter Funktionen.

Hierzu kann es vollkommen ausreichen, dass die elektrische Schnittstelle lediglich einen Kontakt detektiert. Beispielsweise kann die elektrische Schnittstelle in Zusammenhang mit einer Diebstahlswarnung eingesetzt werden. Die Schnittstelle dient dabei sozusagen als Detektor, der erkennt, ob sich das Smartphone in der Aufnahme befindet oder nicht. Bei einer Entnahme des Telekommunikationsendgerät aus der Aufnahme wird die elektrische Verbindung getrennt, wodurch beispielsweise ein am Schiebegriff und/oder am Endgerät abgegebenes Signal auslöst werden kann. Hierzu ist es nicht erforderlich, dass Ladung und/oder Daten übermittelt werden.

In einer bevorzugten Anwendungsform verbindet die elektrische Schnittstelle das Telekommunikationsendgerät mit einer am Einkaufswagen angeordneten Energiequelle. Der Kunde erhält somit bei Einsetzen des Smartphones in die Aufnahme eine Zusatzleistung. Sein Smartphone wird in dieser Zeit geladen. Die hierfür erforderliche Energiequelle kann ohne Weiteres im Schiebegriff vorgehalten werden. Beispielsweise ist es möglich, den Schiebegriff mit einem hierfür geeigneten Akkumulator zu versehen. Der Akkumulator wiederum kann auf einfache Weise durch am Schiebegriff angeordnete Solarzellen und/oder einen in der Einkaufswagenrolle integrierten Dynamo geladen werden. Dies macht ein ansonsten erforderliches Laden des Akkumulators an einer Ladestation überflüssig. Alternativ ist es möglich, auf Akkumulatoren zu verzichten und die Smartphones direkt über Solarzellen und/oder den Dynamo zu speisen.

Weist der Schiebegriff eine Werbefläche auf, ist es von Vorteil, wenn über die elektrische Schnittstelle Werbeinformationen und/oder Energie an die Werbefläche übertragbar werden kann. Dies erspart einen separate Schnittstelle für die Werbefläche. Gleichzeitig wird es hierdurch möglich, die Werbefläche über die vorgenannten Energiequellen aufzuladen.

Vorteilhafterweise umfasst der Schiebegriff eine Schnittstelle zur kabellosen Übertragung von Informationen zwischen dem Telekommunikationsendgerät und einer am Schiebegriff angeordneten elektronischen Werbefläche. Eine nur auf kurze Entfernung zustande kommende Datenverbindung kann bei Unterbrechung ein Alarmsignal abgeben, das auf eine Entnahme des Smartphones aufmerksam macht.

Von besonderem Vorteil ist es natürlich, die Form der Halterung und/oder ihre Schnittstellen bzw. Detektoren auf bestimmte Typen eines mobilen Telekommunikationsgeräts, beispielsweise den iphones von Apple, abzustimmen. Eine mehrere Typen und Hersteller abdeckende Ausbildung der Halterung kommt die zunehmende Angleichung der Smartphones entgegen. Beispielsweise gewährleistet die mittlerweile erfolgte Standardisierung der Anschlüsse den Anschluss eines beliebigen Ladegeräts. Eine entsprechend ausgebildete Schnittstelle ist also in der Lage, eine Vielzahl von Smartphone-Typen abzudecken.

Eine Verriegelung bei einer bevorzugten Ausführungsform der Erfindung wird anhand der folgenden Figuren in Form einer Verfahrensabfolge näher erläutert.

Dabei zeigen:
- Figur 1:: Eine seitliche Ansicht des Schiebegriffs mit einer Halterung in Ruheposition;
- Figur 2:: Eine seitliche Ansicht eines Schiebegriffs mit einer in Halteposition geschwenkten Halterung;
- Figur 3:: Eine seitliche Ansicht gemäß Figur 2 mit in die Aufnahme eingesetztem Smartphone;
- Figur 4:: Eine seitliche Ansicht gemäß Figur 3 mit einem über das Smartphone geschwenkten Verriegelungsbügel; und
- Figur 5:: Eine seitliche Ansicht gemäß Figur 4, bei der das Smartphone verriegelt ist.

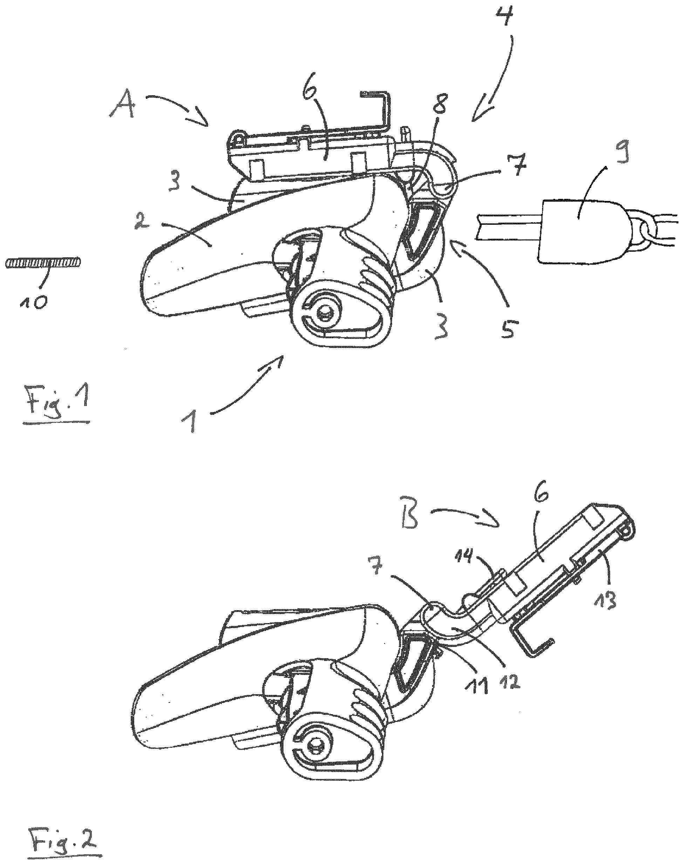

Die Figur 1 zeigt einen Schiebegriff 1, umfassend ein Werbedisplay 2 und ein hier größtenteils vom Werbedisplay 2 verdecktes Pfandschloss 3. An dem Schiebegriff 1 ist in Höhe des Pfandschlosses 3 eine Halterung 4 für ein Smartphone angeordnet. Die Halterung 4 ist beidseitig einer Schlossöffnung 5 des Pfandschlosses 3 am Schiebegriff 1 befestigt, beispielsweise verschraubt. Die Aufnahme 6 der Halterung 4 ist über ein oberhalb der Pfandschlossöffnung 5 angeordnetes Drehgelenk 7 schwenkbar mit dem Schiebegriff 1 verbunden.

In der in Figur 1 gezeigten Ruheposition A liegt die Aufnahme 6 am Schiebegriff 1, genauer gesagt auf der Oberseite des Pfandschlosses 3 an. In der Ruheposition A gibt eine an der Aufnahme 5 gehaltene Blende 8 die Pfandschlossöffnung 5 frei, so dass ein Pfandschlüssel 9 nach Einschub eines Pfandes 10 in das Pfandschloss 3 entnommen und auch wieder eingeführt werden kann. Bei eingesetztem Pfandschlüssel 9 ist die Aufnahme in der Ruheposition A blockiert, da der Schlüsselkopf des eingesetzten Pfandschlüssels 9 ein Verschwenken der Aufnahme 6 verhindert.

In der von Figur 2 gezeigten Halteposition B der Aufnahme 5 ist diese in einem Winkel von ca. 30 Grad zur Senkrechten vom Schiebegriff 1 weg geneigt. Der

Schwenkwinkel des Drehgelenks 7 wird dabei begrenzt durch eine Auflage 11, welche die Halterung 4 unterhalb des Drehgelenks für die gebogenen Träger 12 der Aufnahme 6 ausbildet. In der Halteposition B wird die Aufnahme 6 durch ihr Eigengewicht und das zusätzliche Gewicht eines in ihr eingesetzten Smartphones sicher gehalten.

Das Verschwenken der Aufnahme in die Halteposition B hat eine Positionsänderung der Blende 8 zu Folge, die nun die Schlossöffnung 5 abdeckt und das Einführen des Pfandschlüssels 9 verhindert. Damit wird sichergestellt, dass die Aufnahme in die Ruheposition A verschwenkt sein muss, um das Pfand 10 wieder entnehmen zu können.

Die Aufnahme 6 ist insgesamt schalenförmig ausgebildet und weist an Ihrer Rückseite einen Verriegelungsbügel 13 auf, der über ein am oberen Ende der Aufnahme 6 angeordnetes Drehgelenk 14 schwenkbar an der Aufnahme gehalten wird. Vorderseitig ist ein mechanischer Detektor 15 vorgesehen, der schieberartig durch das Einsetzen des Smartphones bewegt wird. Bei eingesetztem Smartphone befindet er sich in einer Position, in der er ein Verschwenken der Aufnahme in die Ruheposition A blockiert.

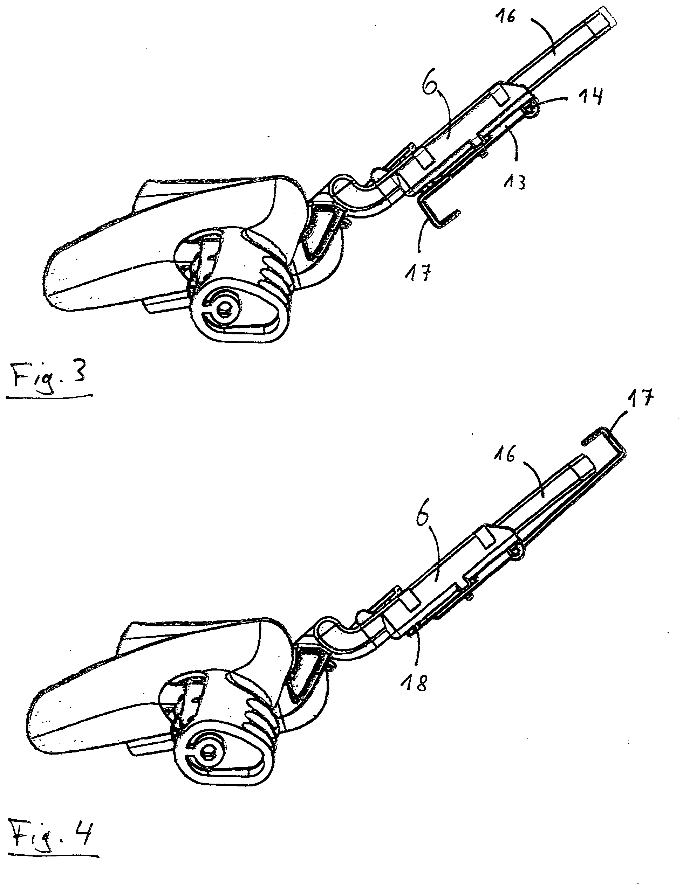

Die Figuren 3 und 4 zeigen das Einsetzen eines Smartphones 16 in die Aufnahme 6 und dessen anschließende Verriegelung mit dem Verriegelungsbügel 13. In der von Figur 2 und 3 gezeigten Position ist der Verriegelungsbügel 13 hinter der Aufnahme angeordnet, vorzugsweise an einem Anschlag angelegt. In dieser Position wird er von der Aufnahme 6 verdeckt und stört nicht bei der Auf- oder Entnahme des Smartphones 16.

An seinem dem Drehgelenk 14 entgegengesetztem Ende weist der Verriegelungsbügel 13 eine Klaue 17 auf. Der Verriegelungsbügel 13 wird nach dem Einsetzen des Smartphones 16 in die Aufnahme 6 vom Kunden aus seiner rückseitigen Lage verschwenkt, bis seine Klaue 17 oberhalb des aus der Aufnahme 6 herausragenden Smartphones 16 positioniert ist.

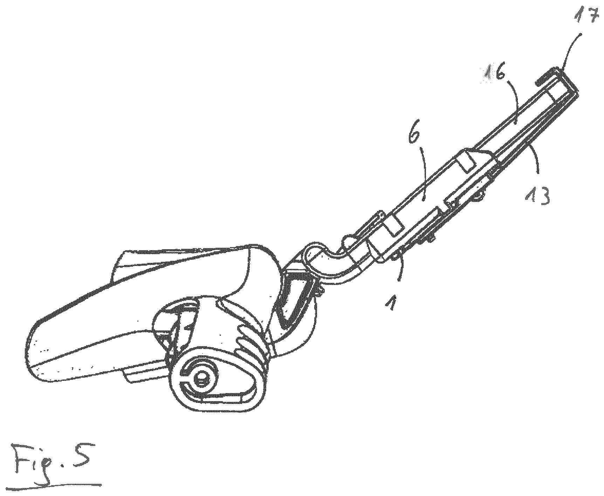

Um das Smartphone wie in Figur 5 gezeigt durch Absenken des Verriegelungsbügels 13 zu fixieren, ist es erforderlich, gleichzeitig zwei beidseitig an der Aufnahme angeordnete Tasten 18 zu betätigen.

Die Entnahme des Smartphones 16 und die Rückstellung der Aufnahme 6 erfolgt in umgekehrter Reihenfolge.

## Patentansprüche

1. Schiebegriff (1) für einen Einkaufswagen, wobei der Schiebegriff (1) eine Halterung (4) für ein mobiles Telekommunikationsendgerät (16), insbesondere ein Smartphone, aufweist, wobei die Halterung (4) eine Aufnahme (6) für das Telekommunikationsendgerät (16) und ein Drehgelenks (7) umfasst, mittels dem die Aufnahme (6) zwischen einer am Schiebegriff (1) anliegenden Ruheposition (A) und einer vom Schiebegriff (1) abstehenden Halteposition (B) verschwenkbar ist, **dadurch gekennzeichnet, dass** die Aufnahme (6) einen Detektor (15) aufweist, der detektiert, ob sich ein Telekommunikationsendgerät (16) in der Aufnahme (6) befindet..

2. Schiebegriff (1) nach Anspruch 1, **dadurch gekennzeichnet, dass** die Halteposition (B) der Aufnahme (6) in etwa um 30 Grad zur Senkrechten geneigt ausgebildet ist, so dass ein Display des in der Aufnahme (6) gehaltenen Telekommunikationsgeräts (16) von einem den Einkaufswagen schiebenden Kunden gut einsehbar ist.

3. Schiebegriff (1) nach Anspruch 1 oder 2, **dadurch gekennzeichnet, dass** die Aufnahme (6) eine Verriegelung für das Telekommunikationsendgerät (16), insbesondere einen Verriegelungsbügel (13) aufweist, mit der zumindest ein Teilbereich des Telekommunikationsendgeräts (16) umgriffen werden kann.

4. Schiebegriff (1) nach Anspruch 3, **dadurch gekennzeichnet, dass** ein zum Lösen der Verriegelung zu betätigende Mechanismus blockierbar ist.

5. Schiebegriff (1) nach Anspruch 4, **dadurch gekennzeichnet, dass** die Verriegelung bei Betätigung zweier einander entgegensetzt an der Aufnahme (6) angeordneter Tasten (18) verstellbar ist.

6. Schiebegriff (1) nach Anspruch 4 oder 5, **dadurch gekennzeichnet, dass** die Blockade des Mechanismus von der Position der Aufnahme (6) abhängig ist und dass die Blockade gelöst ist, wenn die Aufnahme (6) in eine vorbestimmte, insbesondere in etwa senkrecht ausgerichtete Entnahmeposition geschwenkt worden ist.

7. Schiebegriff (1) nach Anspruch 4 oder 5, **dadurch gekennzeichnet, dass** zur Blockade des Mechanismus ein Zahlenschloss vorgesehen ist.

8. Schiebegriff (1) nach einem der vorangegangenen Ansprüche, **dadurch gekennzeichnet, dass** bei Detektion des Telekommunikationsendgeräts (16) ein Verschwenken der Aufnahme (6) in die Ruheposition (A) blockiert ist.

9. Schiebegriff (1) nach einem der vorangegangenen Ansprüche, **dadurch gekennzeichnet, dass** die Aufnahme (6) eine elektrische Schnittstelle für das mobile Telekommunikationsendgerät (16) aufweist.

10. Schiebegriff (1) nach Anspruch 9, **dadurch gekennzeichnet, dass** die elektrische Schnittstelle das Telekommunikationsendgerät (16) mit einer am Einkaufswagen angeordneten Energiequelle verbindet.

11. Schiebegriff (1) nach Anspruch 9 oder 10, **dadurch gekennzeichnet, dass** über die elektrische Schnittstelle Werbeinformationen und/oder Energie an eine am Schiebegriff (1) angeordnete Werbefläche (2) übertragbar ist.

12. Schiebegriff (1) nach einem der vorangegangenen Ansprüche, **dadurch gekennzeichnet, dass** der Schiebegriff (1) eine Daten-Schnittstelle zur kabellosen Übertragung von Informationen zwischen dem Telekommunikationsendgerät (16) und einer am Schiebegriff (1) angeordneten elektronischen Werbefläche (2) umfasst.

13. Schiebegriff (1) nach einem der Ansprüche 8 bis 12, **dadurch gekennzeichnet, dass** eine Unterbrechung der kabellosen Übertragung und/oder eine Entnahme des Telekommunikationsendgeräts (16) aus der Aufnahme (6) ein vom Schiebegriff (1) abgegebenes Signal auslöst.

14. Schiebegriff (1) nach einem der vorangegangenen Ansprüche, **dadurch gekennzeichnet, dass** die Aufnahme (6) eine Blende (8) für ein am Schiebegriff (1) angeordnetes Pfandschloss (3) umfasst, und wobei die Blende (8) die Schlossöffnung (5) des Pfandschlosses (3) in der Ruheposition (A) der Aufnahme (6) abdeckt und in der Halteposition (B) der Aufnahme (6) freigibt.

15. Diebstahl-Warnsystem, bestehend aus einem Schiebegriff (1) gemäß Anspruch 6 und einem au der Aufnahme (6) des Schiebegriffs (1) gehaltenen Telekommunikationsendgerät (16), wobei das Telekommunikationsendgerät (16) einen Neigungssensor umfasst, aufweisend ein auf dem Telekommunikationsendgerät (16) ablaufendes Programmprodukt, insbesondere eine Applikation, wobei das Programmprodukt derart mit dem Neigungssensor zusammenwirkt, dass das Verschwenken des Telekommunikationsendgeräts (16) aus einer Halteposition (A) in eine Entnahmeposition eine Codeabfrage auslöst und dass bei Nicht- oder Falscheingabe des Codes ein Signal am Telekommunikationsendgerät (16) abgegeben wird.

## Claims

1. Push handle (1) for a shopping trolley, wherein the push handle (1) has a holder (4) for a mobile telecommunications terminal device (16), in particular a smartphone, wherein the holder (4) comprises a receptacle (6) for the telecommunications terminal device (16) and a swivel joint (7), by means of which the receptacle (6) can be swivelled between a rest position (A) lying flush against the push handle (1) and a holding position (B) projecting away from the push handle (1), **characterized in that** the receptacle (6) has a detector (15) which detects whether a telecommunications terminal device (16) is located in the receptacle (6).

2. Push handle (1) according to Claim 1, **characterized in that** the holding position (B) of the receptacle (6) is constructed with an inclination of approximately 30 degrees to the vertical so that a display of the telecommunications terminal device (16) held in the holder (6) is easily visible by a customer pushing a the trolley.

3. Push handle (1) according to Claim 1 or 2, **characterized in that** the receptacle (6) has a lock for the telecommunications terminal device (16), in particular a locking clip (13) with which at least a part of the telecommunications terminal device (16) can be clasped.

4. Push handle (1) according to Claim 3, **characterized in that** a mechanism that is operable to release the lock can be blocked.

5. Push handle (1) according to Claim 4, **characterized in that** the lock can be adjusted by actuating two buttons (18) arranged opposite each other on the receptacle (6).

6. Push handle (1) according to Claim 4 or 5, **characterized in that** the blockage of the mechanism is dependent on the position of the receptacle (6), and that the blockage is released when the receptacle (6) has been swivelled into a predetermined, particularly an approximately vertically orientated removal position.

7. Push handle (1) according to Claim 4 or 5, **characterized in that** a combination lock is provided for blocking the mechanism.

8. Push handle (1) according to any one of the preceding claims, **characterized in that** when the telecommunications terminal device (16) is detected, swivelling the receptacle (6) into the rest position (A) is blocked.

9. Push handle (1) according to any one of the preceding claims, **characterized in that** the receptacle (6) has an electrical interface for the mobile telecommunications terminal device (16).

10. Push handle (1) according to Claim 9, **characterized in that** the electrical interface connects the telecommunications terminal device (16) to an energy source disposed on the shopping trolley.

11. Push handle (1) according to Claim 9 or 10, **characterized in that** advertising information and/or energy can be transferred to an advertising surface (2) disposed on the push handle (1) via the electrical interface.

12. Push handle (1) according to any one of the preceding claims, **characterized in that** the push handle (1) comprises a data interface for wireless transmission of information between the telecommunications terminal device (16) and an electronic advertising surface (2) disposed on the push handle (1).

13. Push handle (1) according to any one of Claims 8 to 12, **characterized in that** an interruption in the wireless transmission and/or removal of the telecommunications terminal device (16) from the receptacle (6) triggers a signal emitted by the push handle (1).

14. Push handle (1) according to any one of the preceding Claims, **characterized in that** the receptacle (6) comprises a faceplate (8) for a deposit lock (3) arranged for the push handle (1), and wherein the faceplate (8) covers the lock opening (5) of the deposit lock (3) in the rest position (A) of the receptacle (6) and unblocks it in the holding position (B) of the receptacle (6).

15. Anti-theft warning system, comprising a push handle (1) according to Claim 6 and a telecommunications terminal device (16) retained on the receptacle (6) of the push handle (1), wherein the telecommunications terminal device (16) comprises a tilt sensor which includes a software product running on the telecommunications terminal device (16), particularly' an application, wherein the software product cooperates with the tilt sensor in such manner that the swivelling of the telecommunications terminal device (16) from a holding position (A) into a removal position triggers a code query and that if the code is not entered or entered incorrectly a signal is output on the telecommunications terminal device (16).

## Revendications

1. Poignée de poussée (1) pour un chariot de supermarché, dans laquelle la poignée de poussée (1) présente un support (4) pour un appareil terminal de télécommunication mobile (16), en particulier un Smartphone, dans lequel le support (4) comprend un logement (6) pour l'appareil terminal de télécommunication (16) et un pivot (7) au moyen duquel le logement (6) peut pivoter entre une position de repos (A) en appui contre la poignée de poussée (1) et une position de support (B) en saillie par rapport à la poignée de poussée (1), **caractérisée en ce que** le logement (6) présente un détecteur (15) qui détecte si l'appareil terminal de télécommunication (16) se trouve dans le logement (6).

2. Poignée de poussée (1) selon la revendication 1, **caractérisée en ce que** la position de support (B) du logement (6) est réalisée de manière inclinée de près de 30 degrés par rapport à la verticale de sorte qu'un afficheur de l'appareil terminal de télécommunication (16) supporté dans le logement (6) est bien visible par le client poussant le chariot de supermarché.

3. Poignée de poussée (1) selon la revendication 1 ou 2, **caractérisée en ce que** le logement (6) présente un verrouillage pour l'appareil terminal de télécommunication (16), en particulier un étrier de verrouillage (13) avec lequel il est possible d'entourer au moins une zone partielle de l'appareil terminal de télécommunication (16).

4. Poignée de poussée (1) selon la revendication 3, **caractérisée en ce qu'**un mécanisme à actionner pour la libération du verrouillage peut être bloqué.

5. Poignée de poussée (1) selon la revendication 4, **caractérisée en ce que** le verrouillage est réglable en cas d'actionnement de deux touches (18) disposées en opposition l'une par rapport à l'autre au niveau du logement (6).

6. Poignée de poussée (1) selon la revendication 4 ou 5, **caractérisée en ce que** le blocage du mécanisme est fonction de la position du logement (6) et que le blocage est libéré lorsque l'on a fait pivoter le logement (6) dans une position de retrait prédéfinie, en particulier orientée à peu près verticalement.

7. Poignée de poussée (1) selon la revendication 4 ou 5, **caractérisée en ce que**, pour le blocage du mécanisme, on prévoit une serrure à combinaison.

8. Poignée de poussée (1) selon l'une des revendications précédentes, **caractérisée en ce qu'**en cas de détection de l'appareil terminal de télécommunication (16), un pivotement du logement (6) dans la position de repos (A) est bloqué.

9. Poignée de poussée (1) selon l'une des revendications précédentes, **caractérisée en ce que** le logement (6) présente une interface électrique pour l'appareil terminal de télécommunication mobile (16).

10. Poignée de poussée (1) selon la revendication 9, **caractérisée en ce que** l'interface électrique relie l'appareil terminal de télécommunication (16) à une source d'énergie disposée au niveau du chariot de supermarché.

11. Poignée de poussée (1) selon la revendication 9 ou 10, **caractérisée en ce qu'**il est possible, via l'interface électrique, de transmettre des informations publicitaires et/ou de l'énergie à une surface publicitaire (2) disposée sur la poignée de poussée (1).

12. Poignée de poussée (1) selon l'une des revendications précédentes, **caractérisée en ce que** la poignée de poussée (1) comprend une interface de données pour la transmission sans fil d'informations entre l'appareil terminal de télécommunication (16) et une surface publicitaire (2) électronique disposée sur la poignée de poussée (1).

13. Poignée de poussée (1) selon l'une des revendications 8 à 12, **caractérisée en ce qu'**une interruption de la transmission sans fil et/ou un retrait de l'appareil terminal de télécommunication (16) du logement (6) déclenche un signal émis par la poignée de poussée (1).

14. Poignée de poussée (1) selon l'une des revendications précédentes, **caractérisée en ce que** le logement (6) comprend un obturateur (8) pour une serrure à consigne (3) disposée sur la poignée de poussée (1), et dans laquelle l'obturateur (8) recouvre l'ouverture de serrure (5) de la serrure à consigne (3) dans la position de repos (A) du logement (6) et la dégage dans la position de support (B) du logement (6).

15. Système d'alarme antivol, se composant d'une poignée de poussée (1) selon la revendication 6 et d'un appareil terminal de télécommunication (16) supporté au niveau du logement (6) de la poignée de poussée (1), dans lequel l'appareil terminal de télécommunication (16) comprend un détecteur d'inclinaison présentant un produit de programme informatique s'exécutant sur l'appareil terminal de télécommunication (16), en particulier une application, dans lequel le produit de programme coopère avec le détecteur d'inclinaison de manière à ce que le pivotement de l'appareil terminal de télécommunication (16) d'une position de support (A) vers une position de retrait déclenche une demande de code et qu'en cas de non saisie ou erreur de saisie du code, un signal est émis au niveau de l'appareil terminal de télécommunication (16).
